# FASCICULE DE BREVET EUROPEEN

(11) **EP 0 557 398 B1**
(45) Date de publication et mention de la délivrance du brevet: **26.10.1994**
(21) Numéro de dépôt: 91920636.7
(22) Date de dépôt: 14.11.1991
(51) Int. Cl.: H01R 43/20, B23P 19/00

(54) **PROCEDE ET DISPOSITIF DE GUIDAGE POUR L'INTRODUCTION AUTOMATIQUE D'UNE PIECE MALE DANS UNE PIECE FEMELLE**
FÜHRUNGSVERFAHREN UND -APPARAT ZUM AUTOMATISCHEN EINFÜHREN EINES MÄNNLICHEN TEILS IN EIN WEIBLICHES TEIL
GUIDING METHOD AND DEVICE FOR AUTOMATICALLY INSERTING A MALE PIECE INTO FEMALE PIECE

(30) Priorité: 14.11.1990 FR 9014480
(43) Date de publication de la demande: 01.09.1993
(73) Titulaire: L'ENTREPRISE INDUSTRIELLE, F-75008 Paris (FR)
(72) Inventeur: SORIANO, Louis, F-13400 Aubagne (FR); DAUGY, Bruno, F-83470 Saint-Maximin (FR)
(74) Mandataire: Moretti, René
(86) Numéro de dépôt international: FR9100893
(87) Numéro de publication internationale: WO9209124

(56) Documents cités:
- WO-A-88/05967
- FR-A- 2 644 379
- POLYTECHNISCH TIJDSCHRIFT WERKTUIGBOUW. vol. 35, no. 11, Novembre 1980, RIJSWIJK NL pages 643-653, PROF. DR. IR. H. VAN BRUSSEL: "Gebruik von sensoren bij industriele robots."
- JOURNAL A. vol. 23, no. 3, Juillet 1982, ANTWERPEN BE pages 114-125; J.G. VAN DEN HANENBERG AND J. VREDENBREGT: "An experimental assembly robot."

## Description

La présente invention a pour objet un procédé et un dispositif de guidage pour l'introduction automatique d'une pièce mâle dans une pièce femelle.

Le secteur technique de l'invention est celui de la construction de machines automatiques pour la connexion de pièces mâles dans des pièces femelles.

Une des applications principales de l'invention est la réalisation de robots pour le câblage de faisceaux de fils dont on équipe une ou les deux extrémités de pièces de connexion et que l'on insère dans des alvéoles de boîtiers isolants, ou sur des terminaux de connecteurs ou sur des bornes d'appareils électriques.

Cette application n'est pas limitative car les procédés et dispositifs suivant l'invention s'appliquent dans tous les cas où l'on doit insérer mécaniquement des pièces mâles dans des pièces femelles, dans lesquelles elles pénètrent avec un très faible jeu et dans la mesure où lesdites pièces mâles ont des caractéristiques de flexibilité telles que décrites dans la présente demande.

Cependant. pour la clarté de la présente description, on illustre à titre d'exemple et on se réfère à l'application spécifique pour des robots de câblage, et dans lesquels on utilise indifféremment pour désigner la pièce mâle le terme "connexion" et pour désigner la pièce femelle, le terme "alvéole".

Il est connu en effet que l'insertion mécanique des pièces de connexion mâles dans des pièces de connexion femelles pose des problèmes quand il y a un faible jeu entre ces pièces, ce qui est bien sûr le cas des connexions électriques, puisque même alors ce faible jeu lors de l'insertion doit être nul en position de connexion pour assurer la continuité électrique.

Le faible jeu à l'insertion exige que les deux pièces soient parfaitement alignées préalablement à la préparation avant d'être rapprochées puis définitivement insérées l'une dans l'autre.

Dans la pratique, l'alignement est rarement parfait, même si les axes de la pièce femelle et de la pièce mâle peuvent être parallèles. ils risquent d'être décalés l'un par rapport à l'autre. Les axes des deux pièces peuvent également présenter un défaut de parallélisme. Les deux défauts se cumulent même souvent.

La valeur de la distance et le sens du décalage des axes ainsi que la valeur et le sens de l'écart angulaire entre les axes varient de façon aléatoire et ne sont donc pas connus individuellement.

Ainsi, la position relative de l'alvéole ou pièce femelle et de la pièce de connexion ou pièce mâle n'est souvent connue qu'avec une incertitude supérieure au jeu alvéole-connexion.

Compte tenu de ce faible jeu disponible entre les deux pièces à insérer l'une dans l'autre, il arrive alors qu'un défaut d'alignement entraîne un déplacement relatif de l'extrémité de la pièce mâle par rapport à l'ouverture de la pièce femelle. supérieur au jeu : dans ce cas lorsqu'on rapproche la pièce mâle de la pièce femelle, la face frontale de la pièce mâle bute de front contre les bords de l'ouverture de la pièce femelle et ne peut pénétrer dans celle-ci; le dispositif d'insertion automatique s'arrête alors automatiquement ce qui arrête le fonctionnement de la machine de câblage ou bien il continue à pousser ce qui entraîne une déformation de la pièce à insérer et peut entraîner une détérioration du dispositif d'insertion.

Pour pallier à cet inconvénient de nombreux fabricants et inventeurs ont divulgué divers systèmes, dont le plus simple et le plus connu est le positionnement devant l'alvéole ou pièce femelle d'un guide en forme d'entonnoir de manière à guider la pièce mâle par glissement contre les parois de l'entonnoir : cependant, cette solution a l'inconvénient majeur de nécessiter une précision de position entre l'entonnoir et la pièce femelle, inférieure justement au jeu entre cette pièce et la connexion, ce qui revient en fait à déplacer le problème initial avec deux autres pièces, à moins de fixer préalablement et rigidement celle-ci l'une avec l'autre, ce qui complique la mise en oeuvre ; d'autres inconvénients de cette solution sont sa limite à ne pas permettre de rattraper d'importants écarts de position et la nécessité d'employer des guides entonnoirs spécifiques pour chaque forme, tel que pour chaque diamètre différent.

Ainsi, d'autres solutions ont été développées et certaines ont fait l'objet de dépôts de brevets : on peut citer par exemple la demande FR. 2.640.826 déposé le 19 Décembre 1988 par MM. BRICAUD et LESCOURT sur un "outil de coupe, d'insertion et de sertissage pour connecteurs électriques à déplacement d'isolant", comportant un doigt d'avance longitudinal pas à pas du connecteur, qui est reçu dans l'alvéole en regard d'un coulisseau et y pénètre jusqu'à une certaine zone, et des moyens d'effacement latéral de ce doigt pour permettre l'insertion du fil dans l'alvéole.

On relève également les demandes de brevet FR. 2.618.953 du 31 Juillet 1987 et FR. 2.644.379 du 27 Janvier 1989 déposés par Monsieur Claude RICARD sur des procédés et dispositifs pour insérer automatiquement, respectivement pour le premier "des pièces de connexion électriques dans des alvéoles", et pour le deuxième brevet, "une pièce mâle dans une pièce femelle". Dans le premier, il s'agit de résoudre après insertion les problèmes de positionnement suivant l'axe de la connexion en vérifiant la bonne tenue mécanique de celle-ci, grâce à un épaulement et deux collerettes, mais sans évocation du problème de désalignement des axes lors de l'introduction des pièces: dans le deuxième, il s'agit effectivement de résoudre ce dernier problème qui concerne aussi la présente invention, grâce à une inclinaison volontaire suivant un ou deux axes du support de la pièce mâle, que l'on fait alors pénétrer de biais par l'angle ainsi formé de son extrémité dans la pièce femelle, avant de l'amener en butée contre une paroi de celle-ci pour ensuite redresser l'ensemble et assurer l'insertion complète.

On retrouve du reste une variante plus complexe de ce dernier procédé dans la demande de brevet hollandais NL 7901956 déposé le 12 Mars 1979 par la société LEUVEN RESEARCH & DEVELOPMENT avec essentiellement des capteurs de force associés à des calculs complexes pour adapter les déplacements avec les forces de contre-réaction des pièces les unes par rapport aux autres.

Toutes les solutions évoquées ci-dessus et bien d'autres sont soit inadaptées au problème, soit complexes en nécessitant en particulier des systèmes de préhension de pièces disposant de capacités de translation et de rotation dans toutes les directions, ce qui d'une part alourdit les dispositifs mécaniques du robot et complique également son contrôle et sa programmation, et d'autre part apporte justement des risques de jeux supplémentaires dans les positions relatives.

Un objectif de la présente invention est ainsi de réaliser des moyens qui permettent d'insérer automatiquement une pièce mâle dans une pièce femelle, dans laquelle elle doit pénétrer avec un très faible jeu sans d'une part que l'extrémité frontale de la pièce mâle ne risque de buter de front trop fortement et de coincer le mécanisme et/ou de se détériorer contre les bords de l'ouverture de la pièce femelle si les deux pièces ne sont pas parfaitement alignées, d'autre part, sans avoir un système de mesures de forces complexes ni de dispositif mécanique de déplacement à plus de trois degrés de liberté en rotation et en translation, pour la présentation des pièces les unes par rapport aux autres.

Un autre objectif de la présente invention est de pouvoir permettre la réalisation de dispositif mécanique de guidage et d'insertion à partir de pièces n'ayant au plus que deux degrés de liberté en translation, et au mieux un seul pour simplifier la réalisation du dispositif.

Les objectifs ci-dessus sont atteints par l'introduction automatique d'une pièce mâle compatible dans une pièce femelle, de forme générale cylindrique ou prismatique d'axe donné, les deux pièces étant montées sur des supports et un ensemble de moyens déplacer les deux pièces l'une par rapport à l'autre suivant trois axes de translation orthonormés, dont l'un est parallèle à celui de la pièce femelle et constitue l'axe d'introduction, dans lequel :
- on monte ladite pièce mâle souple en rotation suivant les deux autres axes par rapport à son support;
- on amène un guide en mouvement relatif et suivant un plan perpendiculaire à l'axe d'introduction en regard de l'alvéole de la pièce femelle, de façon à recouvrir une partie de l'ouverture de celle-ci;
- on rapproche, suivant la direction de l'axe d'introduction les deux pièces mâle et femelle jusqu'à une distance donnée, de telle façon que l'extrémité de la pièce mâle recoupe le plan du guide, puis par une translation suivant un des axes perpendiculaires à celui d'insertion, on amène en butée ladite extrémité contre le guide, de telle façon que la pièce mâle s'incline d'un angle prédéterminé;
- on déplace à nouveau le support et la pièce mâle suivant la direction de l'axe d'insertion pour venir mettre en appui frontal l'extrémité contre le bord de l'alvéole, et on escamote alors le guide;
- on translate suivant le même axe que la première translation perpendiculaire à l'axe d'insertion le support et la pièce mâle jusqu'à ce que l'extrémité de celle-ci vienne en appui latéral contre le bord de l'alvéole;
- on déplace le support et la pièce mâle suivant l'axe d'insertion jusqu'à une position prédéterminée de cette pièce dans la pièce femelle ou jusqu'à son coincement. et on ramène le support suivant l'axe perpendiculaire précédent pour amener les axes théoriques d'insertion des pièces mâles et femelles en coïncidence;
- on translate à nouveau le support suivant l'axe d'introduction pour insérer complètement la pièce mâle dans l'alvéole.

Dans un mode préférentiel du procédé ci-dessus, on effectue les mêmes opérations que ci-dessus. en effectuant simultanément ou successivement, pour chaque translation suivant l'axe choisi perpendiculaire à celui d'insertion, la même translation suivant l'axe qui est perpendiculaire au premier axe choisi dans le même plan directeur que le plan.

Le résultat est donc de nouveaux procédés et dispositifs de guidage pour l'introduction automatique d'une pièce mâle dans une pièce femelle.

Ces dispositifs et procédés associés répondent en effet aux divers inconvénients cités précédemment dans les systèmes existants : en effet, ils permettent la connexion de pièces femelles et de pièces mâles avec des supports et moyens d'insertion ne disposant uniquement que de mouvements de translation; d'autre part, les risques de coincement et de détérioration des pièces à connecter sont réduits au minimum.

La présente invention permet également de réaliser l'insertion de connexion dans les alvéoles avec des incertitudes de positions entre les deux pièces connexion-alvéole très importantes, pouvant même être supérieures au pas des alvéoles, dans le cas où plusieurs d'entre elles sont situées sur un même boîtier récepteur.

Un autre avantage de la présente invention est que les mêmes éléments de guidage, de support et de manipulation entre les diverses pièces peuvent être utilisés quelle que soit la section de la connexion sans modification de l'un quelconque des éléments.

On peut également citer la simplicité du dispositif ainsi obtenu, son adaptabilité et sa fiabilité très grandes.

On pourrait citer d'autres avantages de la présente invention, mais ceux cités ci-dessus en montrent déjà suffisamment pour en démontrer la nouveauté et l'intérêt.

La description des dessins et des figures ci-après représentent un exemple de réalisation de l'invention, mais n'ont aucun caractère limitatif : d'autres réalisations sont possibles à partir des revendications qui précisent la portée et l'étendue de cette invention, en particulier en changeant l'objet des connexions telles que décrites dans leur application essentiellement électrique dans les figures ci-jointes.

La figure 1 est un schéma chronologique de profil illustrant le procédé suivant l'invention.

La figure 2 est une vue de dessus ou de dessous d'un boîtier de connexion.

La figure 3 est une vue en coupe d'un exemple de réalisation de connexion électrique.

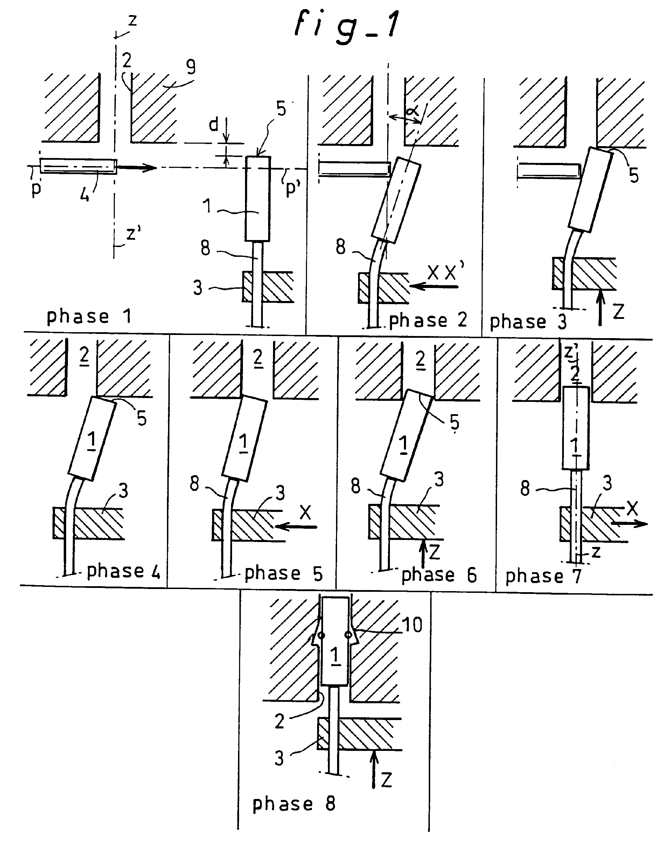

La figure 1 se décompose en huit phases de présentation de profil d'un procédé de guidage pour une connexion suivant l'invention, dans un seul plan x, z qui est le plan de la figure, mais on peut imaginer la même cinématique de procédé dans le plan perpendiculaire à la figure.

Le présent dispositif schématique concerne l'introduction automatique d'une pièce mâle 1 compatible dans une pièce femelle 2, de forme générale cylindrique ou prismatique d'axe zz′; les deux pièces sont montées sur des supports associés à des moyens connus permettant de déplacer les deux pièces l'une par rapport à l'autre, suivant trois axes de translation orthonormés, dont l'un est parallèle à zz′ et constitue l'axe d'introduction.

Les supports décrits ci-dessus peuvent être un support dans lequel la pièce femelle 2 est fixe, et c'est la pièce mâle 1 qui est mobile et est déplacée par son propre support figuré ici comme une pince 3.

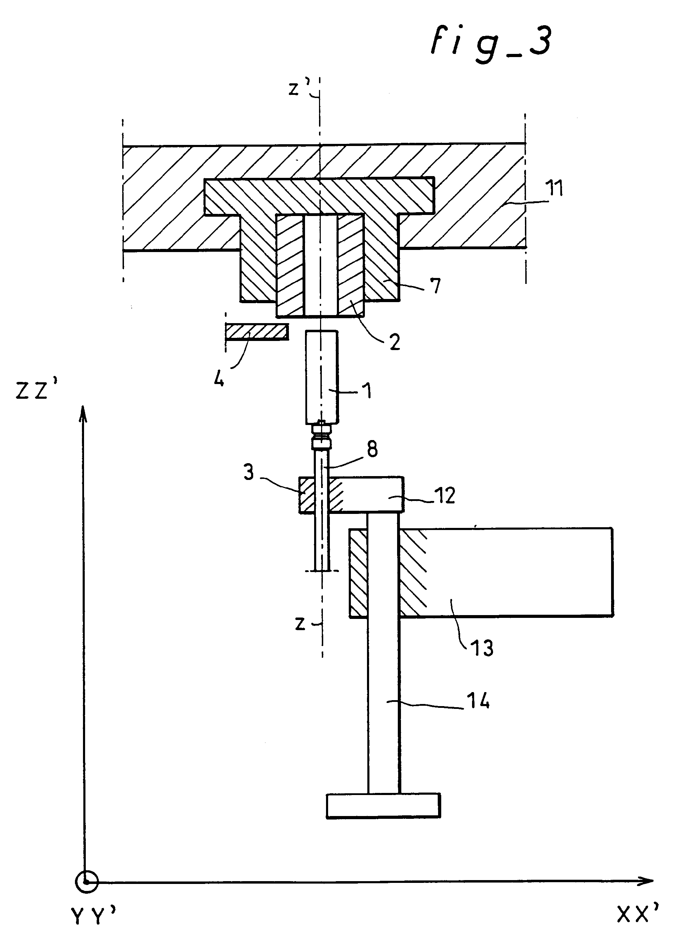

Une autre présentation pourrait être un déplacement de la pièce femelle 2 et par rapport à la pièce mâle 12 qui serait fixe. Une autre présentation pourrait être une combinaison de déplacement des deux pièces, chacune dans des axes donnés comme dans la figure 3.

Ladite pièce mâle 1 est souple en rotation suivant les deux autres axes autre que celui d'insertion et par rapport à son support 3 et, le dispositif comprend un guide 4 pouvant se déplacer en mouvement relatif dans un plan (PP′) perpendiculaire à l'axe zz′ au-dessus de l'alvéole 2 de la pièce femelle, de façon à recouvrir une partie de l'ouverture de celle-ci, de sorte que lorsqu'on amène en butée ladite pièce mâle 1 contre ce guide, cette pièce s'incline d'un angle déterminé (α).

La phase un suivant la figure 1 représente l'alvéole 2 amenée par son support constitué d'une table 9 dans une position fixe théorique d'insertion par rapport à un repère fixe lié à la pièce mâle 1.

Le guide 4 est amené dans la position théorique de guidage que l'on définit par rapport au jeu relatif que l'on veut rattraper par le présent dispositif de guidage, tel qu'en particulier ledit guide 4 recouvre en partie l'ouverture de l'alvéole 2. Le support 3, qui peut être les becs d'une pince, maintient l'extrémité de la pièce mâle 1, qui est, dans le cas d'une connexion électrique, l'extrémité du fil portant la connexion 1.

On rapproche suivant la direction de l'axe zz′ les deux pièces mâle et femelle jusqu'à une distance donnée "d", de telle façon que l'extrémité 5 de la pièce mâle recoupe le plan PP′ du guide 4; puis par une translation suivant un des axes perpendiculaire à celui d'insertion zz′, un chariot portant le support 3 de la pièce mâle 1 se déplace suivant cet axe xx′. La position d'arrêt est telle, suivant la phase deux de la figure 1, que la connexion ou pièce mâle vienne en appui contre le guide 4, provoquant la flexion de la pièce mâle 1 suivant son point de souplesse, qui en l'occurrence ici est le morceau du fil 8 libre entre la connexion et le support pince 3.

La valeur du déplacement en X suivant l'axe xx′ du chariot support 3 sera prédéterminé en fonction de l'incertitude de position de la connexion 1 par rapport au guide escamotable 4. Elle sera telle que l'on soit certain dans tous les cas de mettre en contact ladite connexion 1 avec le guide fixe 4 et que l'on obtienne un angle α optimum qui dépend de la valeur R du quotient de la largeur L ou du diamètre de la connexion sur la valeur J du jeu entre la connexion et l'alvéole : R = L/J; si R est grand, l'angle α est petit, et si R est petit, l'angle α est grand.

On déplace alors suivant la phase trois de cette figure 1 à nouveau le support 3 selon zz′ pour venir mettre en appui l'extrémité 5 de la connexion contre le bord de l'alvéole 2. La force produisant cette mise en contact sera suffisamment faible pour ne pas plier l'extrémité 8 du fil ou endommager ladite connexion.

L'ordre d'arrêt pourra être donné par un capteur d'effort ou autre moyen avec glissement possible du fil 8 dans le support 3; lequel support pouvant par exemple être déterminé pour tenir un effort faible de l'ordre d'un newton et pouvant laisser glisser pour un effort supérieur de l'ordre de 10 newton.

Le guide 4 est alors escamoté et le degré de liberté selon l'axe zz′ du support 3 est bloqué grâce à tout moyen tel qu'un frein et tel que représenté dans la phase quatre de la figure 1.

Le chariot ou support 3 est déplacé alors tel que dans la phase cinq selon l'axe xx′ jusqu'à ce que l'extrémité 5 de la pièce mâle 1 vienne en appui latéral contre le bord de l'alvéole 2 du fait de son inclinaison préalablement définie par les phases précédentes.

La valeur du déplacement xx′ du support 3 est prédéterminée en fonction de l'incertitude de position de la connexion par rapport à l'alvéole. Elle sera telle que l'on soit certain dans tous les cas de mettre la connexion en contact avec le bord intérieur de l'alvéole avec inclinaison de la pièce mâle 1.

Dans la phase six. on avance ensuite le support 3 selon zz′ jusqu'à une position prédéterminée ou jusqu'au coincement de la connexion 1 dans l'alvéole 2, si celui-ci a lieu avant d'atteindre la position prédéterminée.

L'effort qui produira le déplacement sera suffisamment faible pour ne pas plier l'extrémité 5 du fil 8 ou endommager la connexion elle-même. La position prédéterminée sera telle que. connaissant l'incertitude de position de la connexion 1 par rapport à l'alvéole 2, l'on soit certain de venir engager l'extrémité 5 de la connexion 1 à l'intérieur de l'alvéole 2.

La phase sept consiste à déplacer selon xx′ le support 3 et son chariot de translation pour amener les axes théoriques d'insertion du fil 8 et de sa pièce mâle 1 en coïncidence avec l'axe théorique d'insertion de l'alvéole 2 suivant zz′.

On déplace alors selon cet axe zz′ le support 3 vers l'alvéole 2 pour insérer complètement la connexion dans cette alvéole tel que représenté dans la phase huit. La force de poussée du support 3 selon zz′ sera telle que l'on soit certain de réaliser l'encliquetage de la connexion par tout moyen connu 10 préexistant dans l'alvéole 2 et dans la pièce mâle 1 correspondante.

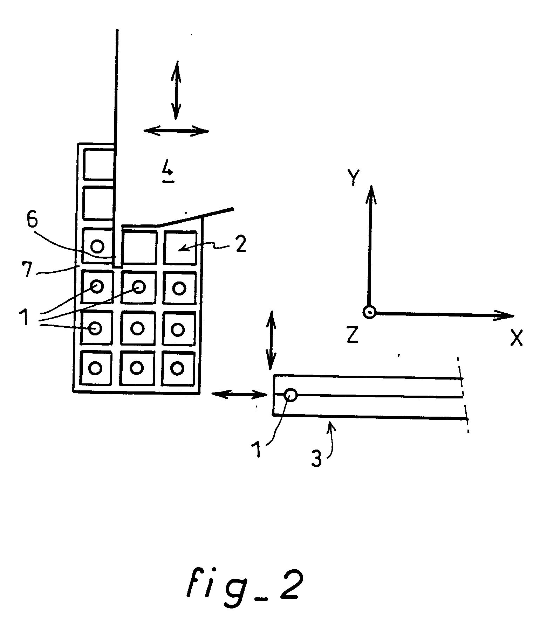

La figure 2 est une vue de dessus ou de dessous d'un boîtier de connexion pour l'introduction automatique et successive de plusieurs pièces mâles 1 dans un boîtier 7 comportant plusieurs pièces femelles 2 présentant des ouvertures dans une même direction et situées dans un même plan parallèle au plan PP′ directeur de déplacement du guide 4. Le procédé permettant ladite introduction est alors tel que :
- on choisit un guide 4 en forme de L, dont chaque branche est perpendiculaire à ses deux directions de translation xx′ et yy′, et dont l'une est suffisamment fine pour être glissée entre deux pièces mâles 1 adjacentes une fois insérées;
- on amène lesdites pièces mâles 1 par translation du support 3 suivant l'une des directions principales xx′ et yy′, qui est situé du côté de l'ouverture des branches du guide 4 et perpendiculaire à celle 6 qui est fine;
- on commence par insérer la première pièce mâle 1 dans la pièce femelle située dans la position la plus extrême du boîtier 7, déterminée comme étant celle située à l'intérieur d'un angle, dont le sommet est au bord de ce boîtier et dont les deux côtés suivent deux directions perpendiculaires correspondant à celle de la branche 6 fine du guide 4 et à celle de l'amenée du support 3;
- on déplace ensuite le guide 4 suivant l'une ou l'autre des directions principales xx′ ou yy′, de façon à insérer les pièces mâles suivant une ligne parallèle à cette direction, puis on décale le guide dans la direction principale perpendiculaire à la direction initiale choisie pour insérer d'autres pièces mâles dans la rangée suivante et parallèle à la première ligne connectée.

Pour effectuer le procédé suivant la description ci-dessus, dans lequel deux axes xx′ et yy′ de guidage sont figurés, il suffit, pour réaliser l'insertion, d'effectuer le procédé tel que défini dans la figure 1, simultanément et/ou successivement, pour chaque translation suivant l'axe xx′. en effectuant la même procédure de translation suivant l'axe yy′ qui lui est perpendiculaire dans le même plan directeur que le plan PP′ du guide 4; les valeurs des translations suivant les axes xx′ ne sont pas toujours cependant les mêmes : elles le sont si les pièces 1, 2 sont de section symétriques par rapport à leur axes, telles que circulaires ou carrées mais elles sont différentes pour les sections dissymétriques telles que les rectangles.

La figure 3 est une vue en coupe d'un exemple de réalisation présentant une connexion électrique dans lequel on retrouve les caractéristiques déjà décrites dans les figures précédentes, soit ici à titre d'exemple de réalisation plus détaillée : un support ou table Il fixe dans l'espace ou tout au moins par rapport à la fixation de la pièce mâle 1 et recevant un boîtier 7 lié à cette table et doté par exemple d'un degré de liberté de translation selon yy′ axe perpendiculaire à la figure.

Ledit boîtier 7 comprend un certain nombre de pièces femelles 2 comportant donc des alvéoles dans lesquelles on doit venir connecter la pièce mâle 1. Cette pièce mâle ou connexion 1 est sertie sur l'extrémité 8 d'un fil électrique qui est fixé lui-même dans un mors 3 d'une pince 12 fixée elle-même au bout d'une tige 14; celle-ci est liée rigidement à ladite pince 12, est mobile par rapport à un chariot 13 qui la maintient, et est doté d'un degré de liberté de translation selon zz′. Ledit chariot 13 est lié au châssis 11 et également doté d'un degré de liberté de translation selon xx′.

On retrouve ainsi les trois degrés de liberté selon les trois axes xx′, yy′, zz′ nécessaires et décrits dans le procédé du dispositif précédent, mais chacun de ces axes est ici lié à un seul des moyens du dispositif, à savoir pour l'axe xx′ le seul chariot 13, pour l'axe zz′ la seule tige 14 tenant la pince 12 et l'axe yy′ pour les supports du boîtier 7 par rapport à la table fixe 11. Ainsi, on note que la simplification des mouvements à des seules translations suivant les trois axes permet de simplifier au maximum les différents mouvements et donc la réalisation des pièces nécessaires au dispositif et au procédé suivant l'invention.

Sur cette figure 3, on remarque également le guide 4 dont les déplacements sont assurés par tout autre moyen connu suivant les axes yy′ et xx′ par exemple.

## Revendications

1. Procédé de guidage pour l'introduction automatique d'une pièce mâle compatible dans une pièce femelle (2), de forme générale cylindrique ou prismatique d'axe (zz′), les deux pièces étant montées sur des supports et un ensemble de moyens permettant de déplacer les deux pièces l'une par rapport à l'autre, suivant trois axes de translation orthonormés, dont l'un est parallèle à (zz′) et constitue l'axe d'introduction, lequel procédé comprenant les étapes suivantes :
- on monte ladite pièce mâle (1) souple en rotation suivant les deux autres axes par rapport à son support (3);
- on amène un guide (4) en mouvement relatif et suivant un plan (PP′) perpendiculaire à l'axe (zz′) en regard de l'alvéole (2) de la pièce femelle, de façon à recouvrir une partie de l'ouverture de celle-ci;
- on rapproche, suivant la direction de l'axe (zz′) les deux pièces mâle et femelle jusqu'à une distance donnée, de telle façon que l'extrémité (5) de la pièce mâle recoupe le plan (PP′) du guide (4), puis par une translation suivant un des axes (xx′) perpendiculaires à celui d'insertion (zz′), on amène en butée ladite extrémité (5) contre le guide (4), de telle façon que la pièce mâle (1) s'incline d'un angle prédéterminé (α);
- on déplace à nouveau le support (3) et la pièce mâle (1) suivant la direction de l'axe (zz′) pour venir mettre en appui frontal l'extrémité (5) contre le bord de l'alvéole (2), et on escamote alors le guide (4);
- on translate suivant le même axe (xx′) le support (3) et la pièce mâle (1) jusqu'à ce que l'extrémité (5) de celle-ci vienne en appui latéral contre le bord de l'alvéole (2);
- on déplace le support (3) et la pièce mâle (1) suivant l'axe (zz′) jusqu'à une position prédéterminée de cette pièce dans la pièce femelle (2) ou jusqu'à son coincement, et on ramène le support (3) suivant l'axe (xx′) pour amener les axes théoriques d'insertion (zz′) des pièces mâles et femelles en coïncidence;
- on translate à nouveau le support (3) suivant l'axe (zz′) pour insérer complètement la pièce mâle (1) dans l'alvéole (2).

2. Procédé de guidage suivant la revendication 1, comprenant en outre les étapes suivantes : l'on effectue les mêmes opérations que dans la revendication 1, en effectuant simultanément ou successivement, pour chaque translation suivant l'axe (xx′), la même procédure de translation suivant l'axe (yy′) qui lui est perpendiculaire dans le même plan directeur que le plan (PP′).

3. Procédé de guidage suivant la revendication 2 pour l'introduction automatique et successive de plusieurs pièces mâles (1) dans un boîtier (7) comportant plusieurs pièces femelles (2) présentant leur ouverture dans une même direction et située dans un même plan parallèle au plan (PP′) directeur de déplacement du guide (4), lequel procédé comporte en outre les étapes suivantes :
- on choisit un guide (4) en forme de L, dont chaque branche est perpendiculaire à ses deux directions de translation (xx′) et (yy′), et dont l'une est suffisamment fine pour être glissée entre deux pièces mâles (1) adjacentes une fois insérées;
- on amène lesdites pièces mâles (1) par translation du support (3) suivant l'une des directions principales (xx′) et (yy′), qui est situé du côté de l'ouverture des branches du guide (4) et perpendiculaire à celle (6) qui est fine;
- on commence par insérer la première pièce mâle (1) dans la pièce femelle située dans la position la plus extrême du boîtier (7), déterminée comme étant celle située à l'intérieur d'un angle, dont le sommet est au bord de ce boîtier et dont les deux côtés suivent deux directions perpendiculaires correspondant à celle de la branche (6) fine du guide (4) et à celle de l'amenée du support (3);
- on déplace ensuite le guide (4) suivant l'une ou l'autre des directions principales (xx′) ou (yy′), de façon à insérer les pièces mâles suivant une ligne parallèle à cette direction, puis on écale le guide dans la direction principale perpendiculaire à la direction initiale choisie pour insérer d'autres pièces mâles dans la rangée suivante et parallèle à la première ligne connectée.

4. Dispositif de guidage suivant l'un des procédés décrits aux revendications 1 à 3 pour l'introduction automatique d'une pièce mâle compatible dans une pièce femelle (2), de forme générale cylindrique ou symétrique d'axe (zz′), les deux pièces étant montées sur des supports et un ensemble de moyens permettant de déplacer les deux pièces l'une par rapport à l'autre, suivant trois axes de translation orthonormés, et suivant l'un des procédés décrits aux revendications 1 à 3, dont l'un est parallèle à (zz′) et constitue l'axe d'introduction, caractérisé en ce que ladite pièce mâle (1) est montée souple en rotation, suivant les deux autres axes, par rapport à son support (3) et le dispositif comprend un guide (4) pouvant se déplacer en mouvement relatif dans un plan (PP′) perpendiculaire à l'axe (zz′) au-dessus de l'alvéole (2) de la pièce femelle, de façon à recouvrir une partie de l'ouverture de celle-ci, de sorte que lorsqu'on amène en butée ladite pièce mâle (1) contre ce guide, cette pièce s'incline d'un angle déterminé (α).

5. Dispositif de guidage suivant la revendication 4, caractérisé en ce que ledit guide (4) est en forme de L, dont chaque branche est perpendiculaire aux deux axes de translation (xx′) et (yy′) orthonormés de référence situés dans le plan (PP′).

6. Dispositif de guidage suivant la revendication 5, pour l'introduction automatique et successive de plusieurs pièces mâles (1) dans un boîtier (7) comportant plusieurs pièces femelles (2) présentant leur ouverture dans une même direction et située dans un même plan parallèle au plan (PP′) directeur de déplacement du guide (4), caractérisé en ce que chaque branche dudit guide (4) en forme de L est perpendiculaire à ses deux directions de translation (xx′) et (yy′) et dont l'une est suffisamment fine pour être glissée entre deux pièces mâles (1) adjacentes une fois insérées.

7. Dispositif de guidage suivant l'une quelconque des revendications 4 à 6, caractérisé en ce que ladite pièce mâle (1) comporte une pièce de connexion proprement dite montée sur un câble électrique (8), qui assure la souplesse en rotation de la pièce mâle et qui est saisie directement par le support (3).

8. Dispositif de guidage suivant l'une quelconque des revendications 6 et 7, caractérisé en ce que le support (3) est translaté suivant l'une des directions principales (xx′) et (yy′), situées du côté de l'ouverture en L des branches du guide (4) et perpendiculaire à celle (6) qui est fine.

## Patentansprüche

1. Führungsverfahren zum automatischen Einführen eines kompatiblen männlichen Teils in ein weibliches Teil (2) von im wesentlichen zylindrischer oder prismatischer Form mit einer Achse (zz′), wobei beide Teile auf Halterungen und einem System von Einrichtungen montiert sind, die die Bewegung der zwei Teile gegeneinander in Richtung dreier orthonormaler Translationsachsen ermöglichen, von denen eine parallel zu (zz′) ist und die Einführungsachse bildet, welches Verfahren folgende Schritte umfaßt:
- Montieren des männlichen Teils (1) elastisch drehbar gegen die zwei anderen Achsen bezogen auf seine Halterung (3) ;
- Heranbringen einer Führung (4) in Relativbewegung entlang einer zur Achse (zz′) senkrechten Ebene (PP′) in eine Stellung gegenüber der Aussparung (2) des weiblichen Teils, um einen Teil von deren Öffnung abzudecken;
- Einander-Annähern des weiblichen und des männlichen Teils in Richtung der Achse (zz′) bis zu einem gegebenen Abstand, so daß das Ende (5) des männlichen Teils die Ebene (PP′) der Führung (4) schneidet; anschließend durch eine Translation entlang einer der zur Einführungsachse (zz′) senkrechten Achsen (xx′) In-Anschlag-Bringen des Endes (5) an der Führung (4), so daß das männliche Teil (1) sich um einen vorgegebenen Winkel (α) neigt;
- erneutes Bewegen der Halterung (3) und des männlichen Teils (1) in Richtung der Achse (zz′), so daß das Ende (5) frontal vor die Kante der Aussparung (2) stößt, und daraufhin Zurückziehen der Führung (4) ;
- Verschieben des Trägers (3) und des männlichen Teils (1) entlang derselben Achse (xx′) bis das Ende (5) des männlichen Teils seitlich am Rand der Aussparung (2) anliegt;
- Verschieben der Halterung (3) und des männlichen Teils (1) in Richtung der Achse (zz′) bis zu einer vorgegebenen Position dieses Teils im weiblichen Teil (2) oder bis zu dessen Klemmen, und Rückbewegen der Halterung (3) entlang der Achse (xx′), um die theoretischen Einführungsachsen (zz′) von männlichem und weiblichem Teil in Koinzidenz zu bringen;
- erneutes Verschieben der Halterung (3) entlang der Achse (zz′), um das männliche Teil (1) in die Aussparung (2) vollständig einzuführen.

2. Führungsverfahren nach Anspruch 1, mit den folgenden Schritten:
Durchführung derselben Operationen wie im Anspruch 1 unter gleichzeitiger oder sukzessiver Durchführung, für jede Translation in Richtung der Achse (xx′), der gleichen Translationsprozedur entlang der Achse (yy′), die auf dieser in derselben Richtebene wie der Ebene (PP′) senkrecht steht.

3. Führungsverfahren nach Anspruch 2 zum automatischen und sukzessiven Einführen mehrerer männlicher Teile (1) in ein Gehäuse (7) mit mehreren weiblichen Teilen (2), die ihre Öffnung in derselben Richtung in einer zur Richtebene (PP′) der Verschiebung der Führung (4) parallelen Ebene aufweisen, welches Verfahren außerdem folgende Schritte umfaßt:
- Auswählen einer L-förmigen Führung (4), von der jeder Zweig auf einer der zwei Translationsrichtungen (xx′) und (yy′) senkrecht steht, und von denen einer schmal genug ist, um zwischen zwei benachbarte, eingeführte männliche Teile (1) eingeschoben werden zu können;
- Heranführen der männlichen Teile (1) durch Translation der Halterung (3) entlang einer der Hauptrichtungen (xx′) und (yy′), die auf der offenen Seite der Zweige der Führung (4) liegt und auf dem schmalen (6) senkrecht steht;
- Beginnen durch Einführen des ersten männlichen Teils (1) in das weibliche Teil, das in derjenigen äußersten Position des Gehäuse (7) liegt, die bestimmt ist als im Inneren eines Winkels liegend, dessen Scheitel am Rand des Gehäuses ist, und dessen zwei Flanken zwei zueinander senkrechten Richtungen folgen, die dem schmalen Zweig (6) der Führung (4) bzw. der Heranführungsrichtung der Halterung (3) entsprechen;
- anschließend Verschieben der Führung (4) in die eine oder andere Hauptrichtung (xx′) oder (yy′), um die männlichen Teile entlang einer zu dieser Richtung parallelen Linie einzuführen, anschlfeßend Verschieben der Führung in der zur ursprünglich gewählten Richtung senkrechten Hauptrichtung, um weitere männliche Teile in der folgenden, zur ersten, angeschlossenen Reihe parallelen Reihe einzuführen.

4. Führungsvorrichtung zum automatischen Einführen, nach einem der in den Ansprüchen 1 bis 3 beschriebenen Verfahren, eines kompatiblen männlichen Teils in ein weibliches Teil (2) von im wesentlichen zylindrischer oder zu einer Achse (zz′) symmetrischer Form, wobei die zwei Teile an Halterungen und einem System von Einrichtungen montiert sind, die es ermöglichen, die zwei Teile entlang dreier orthonomaler Translationsachsen gegeneinaniter zu bewegen, wobei eine Translationsachse parallel zu (zz′) ist und die Einführungsachse darstellt, dadurch gekennzeichnet, daß
das männliche Teil (1) um die zwei anderen Achsen elastisch drehbar gegen seine Halterung (3) montiert ist und die Vorrichtung eine Führung (4) umfaßt, die in einer zur Achse (zz′) senkrechten Ebene (PP′) oberhalb der Aussparung (2) des weiblichen Teils relativ bewegbar ist, derart, daß es einen Teil von deren Öffnung überdeckt, so daß, wenn das männliche Teil (1) an dieser Führung in Anschlag gebracht wird, das Teil sich um einen vorgegebenen Winkeil (α) neigt.

5. Führungsvorrichtung nach Anspruch 4,
dadurch gekennzeichnet, daß die Führung (4) L-förmig ist, wobei jeder Zweig senkrecht auf einer der in der Ebene (PP′) liegenden zwei orthonormalen Bezugstranslationsachsen (xx′) und (yy′) steht.

6. Führungsvorrichtung nach Anspruch 5 zum automatischen, sukzessiven Einführen mehrerer männlicher Teile (1) in ein Gehäuse (7) mit mehreren weiblichen Teilen (2), die ihre Öffnung in derselben Richtung in einer zur Richtebene (PP′) der Verschiebung der Führung (4) parallelen Ebene haben,
dadurch gekennzeichnet,
daß jeder Zweig der L-förmigen Führung (4) senkrecht auf einer der zwei Translationsachsen (xx′) und (yy′) steht und daß einer von ihnen schmal genug ist, um zwischen zwei benachbarte, bereits eingeführte männliche Teile (1) eingeschoben zu werden.

7. Führungsvorrichtung nach einem der Ansprüche 4 bis 6, dadurch gekennzeichnet, daß
das männliche Teil (1) ein Verbindungsstück im engeren Sinne aufweist, das an einem elektrischen Kabel (8) montiert ist, das die elastische Drehbarkeit des männlichen Teils sicherstellt und das direkt von der Halterung (3) getragen wird.

8. Führungsvorrichtung nach einem der Ansprüche 6 und 7, dadurch gekennzeichnet,
daß die Haterung (3) entlang einer der Hauptrichtungen (xx′) und (yy′), die auf der Seite der Öffnung des L der Zweige der Führung (4) liegen, senkrecht zum schmalen Zweig (6) verschoben wird.

## Claims

1. Guiding method and device for the automatic introduction of a compatible male piece into a female piece (2), of general cylindrical or prismatic shape of axis (xx′), the two pieces being mounted on supports and a set of means permitting the displacement of the two pieces with respect to each other, along three orthonormal axes of translation, one of which is parallel to axis (zz′) and constitutes the introduction axis, said method comprising the following steps of:
- mounting said flexible male piece (1) for rotating about the two other axes with respect to its support (3);
- bringing a guide (4) according to a relative movement and according to a plane (PP′) perpendicular to the axis (zz′) in facing relationship with the socket (2) of the female piece, so as to cover part of the opening thereof;
- bringing the two male and female pieces closer together, following the direction of axis (zz′), up to a given distance, such that the end (5) of the male piece meets the plane (PP′) of the guide (4), then, by a translatory movement along one of the axes (xx′) perpendicular to the introduction axis (zz′), bringing said end (5) into abutment against the guide (4), in such a way that the male piece (1) is inclined of a predetermined angle (α);
- moving again the support (3) and the male piece (1) in the direction of axis (zz′) so as to bring the end (5) in frontal abutment against the edge of the socket (2), and then retracting the guide (4);
- translating the suppport (3) and the male piece (1) along said axis (xx′) until the end (5) of said male piece is brought in lateral abutment against the edge of the socket (2);
- moving the suport (3) and the male piece (1) along the axis (zz′) until said piece reaches a predetermined position in the female piece (2) or is wedged therein, and bringing back the support (3) along axis (xx′) so as to bring the theoretical axes of introduction (zz′) of the male and female pieces in coinciding position;
- translating again the support (3) along axis (zz′) in order to insert the male piece (1) completely into the socket (2).

2. Guiding method according to claim 1, further comprising the following steps: the same operations as in Claim 1 are performed, effecting simultaneously or successively, for each translation along axis (xx′), the same translation procedure along axis (yy′) which is perpendicular thereto in the same controlling plane as plane (PP′).

3. Guiding method according to claim 2 for the automatic and successive introduction of a plurality of male pieces (1) into a case (7) comprising a plurality of female pieces (2) having their opening facing in the same direction and situated in the same plane parallel to plane (PP′) controlling the displacement of the guide (4), which method further comprises the following steps of:
- selecting an L-shaped guide (4), each branch of which is perpendicular to its two directions of translation (xx′) and (yy′), and of which one is sufficiently thin to be slipped in between two adjacent male pieces (1), once these have been inserted;
- bringing said male pieces (1) by translation of the support (3) along one of the main directions (xx′) and (yy′), which support is situated on the opening side of the branches of the guide (4) and perpendicular to the thin one (6);
- beginning by inserting the first male piece (1) into the female piece situated in the outermost position of the case (7), and determined as being that situated inside an angle of which the apex is on the edge of said case and the two sides follow two perpendicular directions corresponding to that of the thin branch (6) of the guide (4) and to that along which the support (3) is brought;
- then displacing the guide (4) following either one of the main directions (xx′) and (yy′) so as to insert the male pieces along a line parallel to said direction, and shifting the guide in the main direction perpendicular to the direction initially selected for inserting other male pieces in the next row parallel to the first connected line.

4. Guiding device according to one of the methods described in claims 1 to 3 for the automatic introduction of a compatible male piece into a female piece (2), of general cylindrical or symmetrical shape of axis (zz′), the two pieces being mounted on supports and a set of means permitting to move the two pieces with respect to each other, along three orthonormal axes of translation and according to one of the methods described in claims 1 to 3, one of which is parallel to (zz′) and constitutes the introduction axis, characterized in that said male piece (1) is mounted so as to be flexible in rotation, about the two other axes, with respect to its support (3) and the device comprises a guide (4) movable in relative movement in a plane (PP′) perpendicular to the axis (zz′) above the socket (2) of the female piece, so as to cover part of the opening thereof, so that when said male piece (1) is brought into abutment against said guide, said piece is inclined of a predetermined angle (α).

5. Guiding device according to claim 4, characterized in that said guide (4) is L-shaped, with each branch of the L being perpendicular to the two orthonormal reference axes of translation (xx′) and (yy′) situated in plane (PP′).

6. Guiding device according to claim 5, for the automatic and successive introduction of a plurality of male pieces (1) in a case (7) comprising a plurality of female pieces (2) having their opening facing in the same direction and situated in the same plane parallel to plane (PP′) controlling the displacement of the guide (4), characterized in that each branch of said L-shaped guide (4) is perpendicular to its two directions of translation (xx′) and (yy′) and one of said branches is sufficiently thin to be slipped in between two adjacent male pieces (1), once these have been inserted.

7. Guiding device according to any one of claims 4 to 6, characterized in that said male piece (1) comprises a connection piece proper, mounted on an electrical cable (8), which ensures the flexibility in rotation of the male piece and which is directly gripped by the support (3).

8. Guiding device according to any one of claims 6 and 7, characterized in that the support (3) is translated in one of the main directions (xx′) and (yy′) situated on the side of the L-shaped opening of the branches of guide (4) and perpendicular to the thin one (6).
